# DEMANDE DE BREVET EUROPEEN

(11) **EP 3 757 865 A1**
(43) Date de publication de la demande: **30.12.2020**
(21) Numéro de dépôt: 20176322.4
(22) Date de dépôt: 25.05.2020
(51) Int. Cl.: G06F 40/30, G06Q 10/10, H04M 3/00, H04L 12/58, H04M 3/533, H04M 3/42

(54) **PROCÉDÉ DE TRAITEMENT D'UN MESSAGE ET DISPOSITIF CORRESPONDANT**

(30) Priorité: 25.06.2019 FR 1906913
(71) Demandeur: ORANGE, 75015 Paris (FR)
(72) Inventeur: FLOURY, Cédric, 92326 CHATILLON (FR); CATTEAU, Aurore, 92326 CHATILLON (FR)
(74) Mandataire: Vidon Brevets & Stratégie

(57) **Abrégé**

L'invention concerne un procédé de traitement d'un message, mis en œuvre par un terminal d'un utilisateur, en cours de composition dudit message, ledit terminal ayant accès à un groupe de messages comprenant au moins un message émis par ledit utilisateur vers au moins un utilisateur destinataire. Au moins une partie dudit message en cours de composition par ledit utilisateur est obtenue (11). Pour au moins un message dudit groupe de messages, un score de similarité sémantique entre ladite au moins une partie du message en cours de composition et ledit au moins un message dudit groupe de messages est déterminé (131). Au moins un message est sélectionné (132) dans ledit groupe de messages en fonction dudit score de similarité sémantique déterminé pour ledit au moins un message dudit groupe, et au moins une partie d'au moins un message de réponse reçu en réponse audit au moins un message sélectionné est restituée (14).

## Description

### 1. Domaine de l'invention

L'invention concerne les communications entre terminaux, et plus particulièrement l'identification d'informations redondantes transmises lors de telles communications.

### 2. Art Antérieur

Aujourd'hui, un utilisateur dispose d'un grand nombre de moyens de communication avec un interlocuteur. Par exemple, deux utilisateurs peuvent s'échanger des informations ou communiquer par messages texte que ce soit par une application de SMS (pour Short Message Service en anglais), ou par une application de conversation instantanée (What's app par exemple, etc...), ou bien par messages vocaux, par exemple en utilisant une application de dictée vocale et d'envoi de MMS (pour Multimedia Message Service en anglais), ou bien via une messagerie vocale ou un service de visioconférence (Skype, Facetime, etc...).

Les communications entre utilisateurs se multipliant, il arrive souvent qu'une même information soit échangée entre deux utilisateurs au cours de différentes communications. Typiquement, il arrive qu'un utilisateur pose plusieurs fois une même question à un même interlocuteur, par exemple parce que cet utilisateur ne se rappelle pas avoir déjà posé la question, ou parce qu'il ne sait pas s'il a enregistré la réponse, ni où il a enregistré une telle réponse.

Par exemple, à un instant donné, un utilisateur demande par SMS à un interlocuteur l'adresse postale dudit interlocuteur. Quelques mois plus tard, ce même utilisateur lui redemande par SMS son adresse postale car il ne l'a pas enregistrée dans ses contacts, ou bien il a oublié qu'il avait déjà demandé l'adresse postale de l'interlocuteur. L'interlocuteur doit alors ressaisir son adresse postale en réponse au SMS. Ceci peut être fastidieux et constitue une perte de temps tant pour l'interlocuteur que pour l'utilisateur.

### 3. Exposé de l'invention

L'invention vient améliorer l'état de la technique. Elle propose à cet effet un procédé de traitement d'un message, mis en œuvre par un terminal d'un utilisateur, en cours de composition dudit message. Le terminal a accès à un groupe de messages comprenant au moins un message émis par ledit utilisateur vers au moins un utilisateur destinataire. Selon l'invention, le procédé comprend les étapes suivantes:
- obtention d'au moins une partie dudit message en cours de composition par ledit utilisateur,
- détermination, pour au moins un message dudit groupe de messages, d'un score de similarité sémantique entre ladite au moins une partie du message en cours de composition et ledit au moins un message dudit groupe de messages,
- sélection dans ledit groupe de messages, d'au moins un message en fonction dudit score de similarité sémantique déterminé pour ledit au moins un message dudit groupe,
- restitution d'au moins une partie d'au moins un message de réponse reçu en réponse audit au moins un message sélectionné.
L'invention permet ainsi d'identifier parmi un groupe de messages émis par un utilisateur vers un utilisateur destinataire, au moins un message similaire au message en cours de composition par l'utilisateur. La réponse reçue en réponse à ce message identifié peut alors être restituée à l'utilisateur en train de composer un message à destination de l'utilisateur destinataire ou d'un autre utilisateur destinataire, car il est fort probable qu'elle corresponde à la réponse attendue par l'utilisateur au message qu'il est en train de composer.
Par exemple, si l'utilisateur compose un message demandant à l'utilisateur destinataire son adresse postale, et qu'un message de réponse à une telle question a déjà été reçu par l'utilisateur, le procédé de traitement de message selon l'invention permet d'identifier cette réponse et de la restituer à l'utilisateur. Celui-ci peut alors abandonner la composition de son message. Le procédé selon l'invention permet d'éviter l'envoi de messages redondants via le réseau de communication (une même question et une même réponse transmises à différents instants), et permet aux deux interlocuteurs de gagner du temps.

Selon un mode particulier de réalisation de l'invention, le groupe de messages est un historique de messages émis ou reçus par ledit utilisateur du terminal.

Selon ce mode particulier de réalisation de l'invention, un message similaire à celui en train d'être composé par l'utilisateur est recherché parmi l'historique des échanges de l'utilisateur. Ainsi, l'espace de recherche n'est pas limité aux seuls messages échangés entre l'utilisateur en train de composer un message et l'utilisateur destinataire. En effet, la réponse au message en cours de composition a peut-être été reçue par l'utilisateur du terminal en provenance d'un autre utilisateur distinct de l'utilisateur destinataire.

Selon un autre mode particulier de réalisation de l'invention, le message en cours de composition est un message texte ou vocal. Dans le cas d'un message vocal, une étape de transcription du message vocal peut être ajoutée pour convertir les mots dictés par l'utilisateur en texte.

Selon un autre mode particulier de réalisation de l'invention, le groupe de messages comprend des messages émis ou reçus à l'aide de différentes applications.
Selon ce mode particulier de réalisation de l'invention, le procédé recherche des messages présentant un score de similarité sémantique avec le message en cours de composition, parmi des messages émis ou reçus par l'utilisateur du terminal à partir de différents moyens de communication que celui-ci peut utiliser pour communiquer avec un interlocuteur, par exemple SMS, application de conversation instantanée, messagerie vocale, courrier électronique ...
En effet, l'utilisateur peut avoir déjà envoyé un message similaire au message en cours de composition mais via une autre application que celle utilisée pour envoyer le message en cours de composition.

Selon un autre mode particulier de réalisation de l'invention, au moins un message dudit groupe est sélectionné lorsque le score de similarité sémantique dudit message est supérieur à un seuil prédéterminé.
Par exemple, selon ce mode particulier de réalisation de l'invention, les messages présentant un score de similarité sémantique avec le message en cours de composition supérieur à 80% sont sélectionnés.

Selon un autre mode particulier de réalisation de l'invention, lorsque plusieurs messages dudit groupe présentent un score de similarité sémantique supérieur audit seuil prédéterminé, le message dudit groupe présentant le score de similarité sémantique le plus élevé est sélectionné.
Selon ce mode particulier de réalisation de l'invention, seul le message le plus pertinent est sélectionné et la réponse reçue à ce message est restituée à l'utilisateur.

Selon un autre mode particulier de réalisation de l'invention, la restitution de ladite au moins une partie dudit moins un message de réponse comprend l'affichage de ladite au moins une partie du message de réponse dans une interface graphique d'une application de communication via laquelle l'utilisateur compose son message, ladite au moins une partie du message de réponse étant affichée dans une bannière placée au-dessus d'une fenêtre dans laquelle l'utilisateur compose son message.
Selon ce mode particulier de réalisation de l'invention, la réponse possible au message en cours de composition est facilement visible pour l'utilisateur du terminal.

Selon un autre mode particulier de réalisation de l'invention, lorsque tous les scores de similarité sémantique des messages dudit groupe sont inférieurs à un seuil prédéterminé, aucun message dudit groupe n'est sélectionné. Selon ce mode particulier de réalisation de l'invention, lorsqu'aucun message ne présente un score de similarité suffisant, aucune réponse n'est restituée à l'utilisateur du terminal. Par exemple, il peut s'agir d'un message en cours de composition que l'utilisateur compose pour la première fois.

L'invention concerne également un dispositif de traitement d'un message en cours de composition, ledit dispositif de communication comprenant une mémoire et un processeur configuré pour:
- accéder à un groupe de messages comprenant au moins un message émis par ledit utilisateur vers au moins un utilisateur destinataire,
- obtenir au moins une partie dudit message en cours de composition par ledit utilisateur,
- déterminer, pour au moins un message dudit groupe de messages, un score de similarité sémantique entre ladite au moins une partie du message en cours de composition et ledit au moins un message dudit groupe de messages,
- sélectionner dans ledit groupe de messages, au moins un message en fonction dudit score de similarité sémantique déterminé pour ledit au moins un message dudit groupe,
- restituer au moins une partie d'au moins un message de réponse reçu en réponse audit au moins un message sélectionné.

Selon un mode particulier de réalisation de l'invention, le terminal comprend un dispositif de traitement d'un message tel que décrit précédemment.

L'invention concerne également un programme d'ordinateur comportant des instructions pour la mise en œuvre du procédé de traitement d'un message décrit ci-dessus selon l'un quelconque des modes particuliers de réalisation décrits précédemment, lorsque ledit programme est exécuté par un processeur. Ce procédé peut être mis en œuvre de diverses manières, notamment sous forme câblée ou sous forme logicielle.
Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.
L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, un disque dur, une clé USB. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 présente un environnement de mise en œuvre de l'invention selon un mode particulier de réalisation de l'invention,
[Fig 2] La figure 2 illustre des étapes du procédé de traitement d'un message selon un mode particulier de réalisation de l'invention,
[Fig 3] La figure 3 illustre un exemple d'interface graphique d'une application de composition de message selon l'art antérieur,
[Fig 4] La figure 4 illustre un exemple d'interface graphique d'une application de composition de message selon un mode particulier de réalisation de l'invention,
[Fig 5] La figure 5 illustre un exemple d'un dispositif adapté pour mettre en œuvre le procédé de traitement d'un message selon un mode particulier de réalisation de l'invention.

### 5. Description d'un mode de réalisation de l'invention

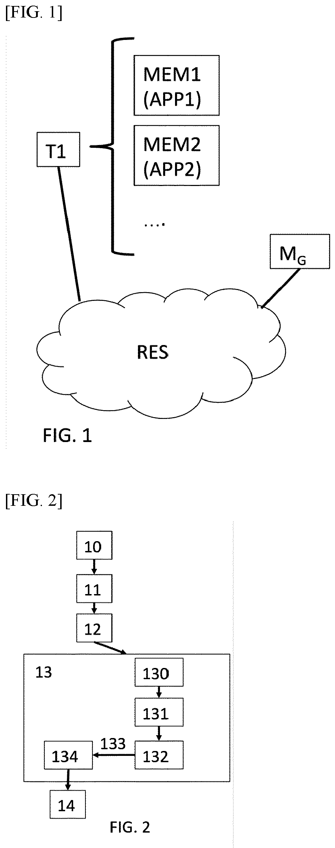

La figure 1 présente un environnement de mise en œuvre de l'invention selon un mode particulier de réalisation de l'invention. Un tel environnement comprend un terminal T1, par exemple un Smartphone ou un ordinateur personnel (PC pour Personal Computer en anglais). Un tel terminal T1 est adapté pour émettre et recevoir des communications vers ou en provenance d'autres terminaux, via un réseau de communication RES. Le réseau de communication RES est par exemple un réseau de données fixe ou mobile.
Le terminal T1 est adapté pour accéder à un ou plusieurs emplacements mémoires dans lequel ou lesquels est mémorisé un historique de conversations entre un utilisateur du terminal T1 et d'autres utilisateurs. Par exemple, comme illustré en figure 1, le terminal T1 comprend des emplacements mémoires MEM1, MEM2 respectivement dédiés à différentes applications de communication APP1, APP2 et dans lesquels sont respectivement mémorisés les messages échangés entre l'utilisateur du terminal T1 et d'autres utilisateurs. Par messages échangés entre l'utilisateur du terminal T1 et d'autres utilisateurs, on entend ici des messages émis ou reçus par l'utilisateur du terminal T1 vers ou en provenance des autres utilisateurs.
Les applications de communication précitées peuvent être tout type d'applications adaptées pour émettre et recevoir des messages texte ou vocaux. De telles applications peuvent être par exemple: une messagerie de courrier électronique, une application de messagerie instantanée, une messagerie vocale, une application de dictée vocale, une application de SMS, ou MMS, ....
Dans le cas de messages vocaux émis ou reçus par l'utilisateur du terminal T1, ces messages sont préalablement convertis en messages texte et mémorisés sous cette forme.
Les messages échangés et mémorisés dans les emplacements mémoires peuvent être des messages échangés entre l'utilisateur du terminal T1 et un autre utilisateur ou bien des messages échangés entre groupes d'utilisateurs.
Chaque utilisateur émetteur ou récepteur d'un message mémorisé est identifié à l'aide d'un identifiant, par exemple un numéro de téléphone mobile, ou bien une adresse e-mail.
L'historique des messages de l'utilisateur du terminal T1 peut aussi être mémorisé sur un serveur distant (M_{G} sur la figure 1), par exemple un serveur regroupant tous les messages émis ou reçus par l'utilisateur via différents terminaux.

La figure 2 illustre des étapes du procédé de traitement d'un message selon un mode particulier de réalisation de l'invention.
Lors d'une étape 10, un utilisateur U1 souhaite composer un message à destination d'un autre utilisateur U2 à l'aide du terminal T1.
Pour cela, lors d'une étape 10, il sélectionne par exemple l'utilisateur U2 dans une liste de contacts mémorisée dans le terminal T1. En variante, l'utilisateur U1 peut sélectionner un message dans une conversation avec l'utilisateur U2 et composer son message en réponse au message sélectionné. L'utilisateur U1 commence alors à composer son message, soit par dictée vocale, soit en tapant le texte dans une fenêtre de composition.

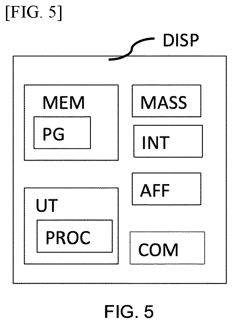

Par exemple, dans son message, l'utilisateur U1 pose une question relative à l'utilisateur U2, par exemple: "Quelle est ton adresse postale", ou bien "Quelle est ta date de naissance ?".
Selon un autre exemple, dans son message, l'utilisateur U1 pose une question à l'utilisateur U2 qui est relative à un autre utilisateur U3, par exemple: "Quelle est l'adresse postale de U3", ou bien "Quelle est la date de naissance de U3 ?".
Lors d'une étape 11, le terminal T1 obtient au moins une partie du message en cours de composition. A chaque mot saisi, par exemple lorsque le dernier caractère saisi est un "espace", le mot saisi est fourni à un module d'analyse sémantique MASS (fig.5) qui analyse la similarité sémantique entre les mots du message en cours de composition et des mots de messages préalablement émis ou reçus par l'utilisateur du terminal T1. De plus, au cours de l'étape 11, le terminal T1 extrait du message en cours de composition au moins un identifiant d'un utilisateur relatif au message en cours de composition. Selon le cas, il peut s'agir de l'identifiant de l'utilisateur U2 destinataire du message en cours de composition et/ou d'un identifiant d'un utilisateur U3 nommé dans le message en cours de composition. Au cours de l'étape 11, le terminal T1 transmet ce ou ces identifiants au module d'analyse sémantique MASS. Selon un mode particulier de réalisation de l'invention, lorsque le message composé est un message vocal, les mots dictés par l'utilisateur du terminal T1 sont transcrits au cours d'une étape 12.
Lors d'une étape 13, le terminal T1 détermine une réponse susceptible d'être attendue par l'utilisateur U1 lors de la composition de son message.
Pour cela, le module d'analyse sémantique MASS analyse la similarité sémantique entre les mots du message en cours de composition et des mots de messages d'un groupe de messages auquel le terminal T1 a accès. Par défaut, le groupe de messages correspond aux messages échangés entre l'utilisateur U1 et l'utilisateur U2 via l'application de communication utilisée par l'utilisateur U1 pour composer son message.
En variante, le groupe de messages à partir duquel l'analyse sémantique va être réalisée peut être étendu aux messages échangés entre l'utilisateur U1 et l'utilisateur U2 via différentes applications de communication.
Selon un mode particulier de réalisation de l'invention, lors d'une étape 130, le terminal T1 détermine un groupe de messages à partir duquel l'analyse sémantique va être réalisée. Par exemple, lorsque le terminal T1 a accès à un réseau de données, le module d'analyse sémantique MASS peut rechercher des messages similaires dans un historique de messages de l'utilisateur U1 mémorisé sur un serveur distant, par exemple le serveur M_{G} décrit en relation avec la figure 1.
Lorsque le terminal T1 n'a pas accès à un réseau de données, ou si ses capacités de connexion sont limitées (faible bande passante par exemple), le module d'analyse sémantique MASS peut rechercher des messages similaires dans les emplacements mémoires du terminal T1 uniquement.
Selon un mode particulier de réalisation, en fonction des capacités de calcul du terminal T1 et de ses capacités de connexion à un réseau, l'analyse sémantique peut être réalisée par un module d'analyse distant.
Lors d'une étape 131, le module d'analyse sémantique MASS calcule un score de similarité sémantique entre les mots composés par l'utilisateur U1 lors de la composition de son message et chaque message du groupe de messages déterminé précédemment.
Un tel calcul de similarité sémantique entre textes peut être réalisé selon des techniques de l'état de l'art. Des exemples de méthodes d'analyse de similarité sémantique sont par exemple donnés dans **"*Comparaison de textes: quelques approches...* " *Elsa Negre, 2013, hal-00874280.***
De telles techniques permettent de déterminer la pertinence d'un message préalablement reçu ou émis avec le message en cours de composition. Autrement dit, plus le score d'un message est élevé, plus le texte de ce message est proche du texte du message en cours de composition.
Il est ainsi possible de déterminer si un message similaire a déjà été envoyé par l'utilisateur U1 ou reçu par l'utilisateur U1.
Lors d'une étape 132, en fonction du score de similarité sémantique calculé pour les messages du groupe, un ou des messages ou zéro message est sélectionné.
Selon un mode particulier de réalisation de l'invention, les messages dont le score de similarité sémantique est supérieur à un seuil prédéterminé sont sélectionnés. Par exemple, les messages dont le score est supérieur à 80% sont sélectionnés.
Selon un autre mode particulier de réalisation de l'invention, le message présentant le score de similarité sémantique le plus élevé est sélectionné, sans tenir compte d'un seuil.

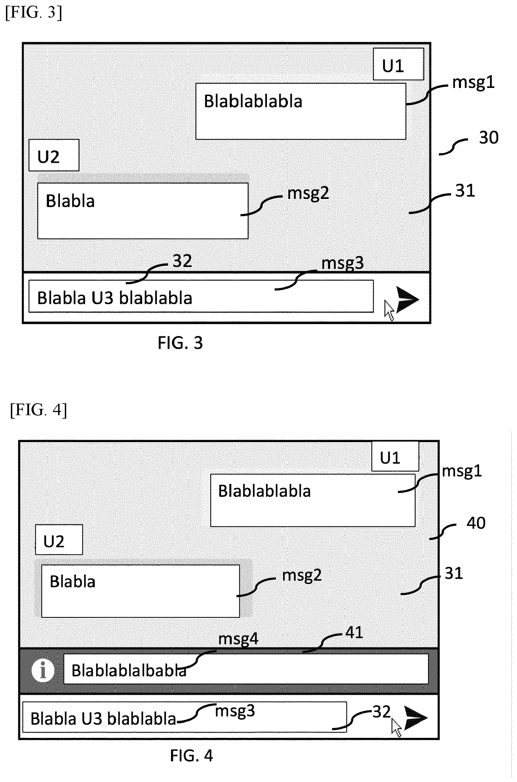

En variante de ce mode particulier de réalisation de l'invention, le message présentant le score de similarité sémantique le plus élevé et si ce score de similarité sémantique est supérieur au seuil prédéterminé, est sélectionné.
Ainsi, si aucun message ne présente un score de similarité sémantique supérieur au seuil prédéterminé, aucun message n'est sélectionné.
Dans sa recherche, le module d'analyse sémantique peut également fonctionner simultanément en plusieurs langues. Par exemple, si l'utilisateur U1 communique en plusieurs langues distinctes avec un même interlocuteur, le module d'analyse sémantique peut analyser des messages du groupe de messages dans une langue différente de la langue du message en cours de composition. Les mots du message en cours de composition sont alors traduits dans la langue d'un message du groupe pour en analyser la similarité sémantique.
Le module d'analyse sémantique prend également en compte le caractère temporel des mots du message en cours de composition. Par exemple, si l'utilisateur U1 pose une même question dont la réponse à un caractère temporel, autrement dit si la réponse peut varier en fonction du moment où la question est posée, le module d'analyse sémantique ne recherche pas de message similaire. Par exemple, si l'utilisateur U1 du terminal T1 pose une question de type: "A quelle heure est le rendez-vous ? " ou "Quand seras-tu chez toi ?", "A quel cinéma se retrouve-t-on ?", le module d'analyse sémantique ne recherche pas de message similaire.
Lors d'une étape 133, le module d'analyse sémantique MASS transmet au terminal T1 un groupe de messages pertinents sélectionnés. Comme décrit ci-dessus, ce groupe de messages pertinents peut éventuellement être vide.
Lors d'une étape 134, le terminal T1 sélectionne pour au moins un message du groupe de messages pertinents un message de réponse reçu en réponse à ce message pertinent. Par exemple, le message de réponse sélectionné est celui reçu juste après l'envoi du message pertinent.
Lors d'une étape 14, le terminal T1 restitue à l'utilisateur U1 en train de composer son message au moins une partie de la réponse sélectionnée. Un exemple d'une telle restitution est par exemple illustré en figure 4.

La figure 3 illustre un exemple d'interface graphique 30 d'une application de composition de message selon l'art antérieur. L'interface graphique 30 comprend une un cadre 31 dans lequel les messages *msg1, msg2* préalablement échangés entre l'utilisateur U1 du terminal T1 et l'utilisateur destinataire U2 sont affichés, et une fenêtre 32 dans laquelle l'utilisateur U1 du terminal T1 compose un message *msg3.*

La figure 4 illustre un exemple d'interface graphique 40 d'une application de composition de message selon un mode particulier de réalisation de l'invention. L'interface graphique 40 est similaire à l'interface graphique 30 décrite en relation avec la figure 3. L'interface graphique 40 est modifiée via l'exécution du procédé de traitement de messages décrit en relation avec la figure 2 selon un mode particulier de réalisation de l'invention, lorsqu'un message de réponse sélectionné à l'étape 13 est restitué à l'étape 14.
Pour cela, lors de l'étape 14, le message de réponse sélectionné ou au moins une partie du message de réponse est affiché dans une bannière 41 placée au-dessus de la fenêtre 32 de composition de message. Une information indiquant à l'utilisateur qu'un message similaire a déjà été envoyé peut également être affichée dans la bannière 41. Par exemple, le message en cours de composition *msg3* peut être:
"Est-ce que tu pourrais me donner ton adresse postale s'il te plaît ?".
Dans l'exemple décrit ici, un message similaire a déjà été envoyé par l'utilisateur U1 à l'utilisateur U2. Dans ce cas, un message *msg4* est affiché dans la bannière 41 à l'utilisateur U1, le message *msg4* est par exemple de type: "U2 semble avoir déjà répondu à cette question il y a 1 mois: "Bat. WF, 2 avenue Pierre Marzin, 2300 Lannion".
Si à l'étape 132, aucun message pertinent n'est sélectionné, l'interface graphique 40 n'est pas modifiée.

La figure 5 illustre un exemple d'un dispositif DISP adapté pour mettre en œuvre le procédé de traitement d'un message selon l'un quelconque des modes particuliers de réalisation de l'invention décrits précédemment.
Selon un mode particulier de réalisation de l'invention, le dispositif DISP a l'architecture classique d'un ordinateur ou d'un téléphone mobile et comprend notamment une mémoire MEM, une unité de traitement UT, équipée par exemple d'un processeur PROC, et pilotée par un programme d'ordinateur PG stocké en mémoire MEM. Le programme d'ordinateur PG comprend des instructions de mise en œuvre du procédé de traitement d'un message décrit en relation avec la figure 2, lorsque le programme PG est exécuté par le processeur PROC.
A l'initialisation, les instructions de code du programme d'ordinateur PG sont par exemple chargées dans une mémoire avant d'être exécutées par le processeur PROC. Selon un mode particulier de réalisation de l'invention, le dispositif DISP comprend un module d'analyse sémantique MASS adapté pour analyser la similarité sémantique entre des mots d'un message en cours de composition sur une interface du dispositif DIPS et des mots de messages préalablement mémorisés en mémoire MEM ou dans une mémoire distante.
Le dispositif DISP comprend également une interface utilisateur INT permettant à un utilisateur de composer un message et un écran AFF permettant de restituer au moins une partie d'un message de réponse pertinent avec le message en cours de composition.
Le dispositif DISP comprend également une interface de communication COM permettant au dispositif de communiquer avec d'autres terminaux, d'accéder à une mémoire distante, ou à un module d'analyse sémantique MASS distant.
Selon un mode particulier de réalisation de l'invention, le dispositif DISP est compris dans un terminal (smartphone, tablette, téléphone mobile, ordinateur de type PC, etc...).

## Revendications

1. Procédé de traitement d'un message, mis en œuvre par un terminal d'un utilisateur, en cours de composition dudit message, ledit terminal ayant accès à un groupe de messages comprenant au moins un message émis par ledit utilisateur vers au moins un utilisateur destinataire, le procédé comprend les étapes suivantes:
- obtention (11) d'au moins une partie dudit message en cours de composition par ledit utilisateur,
- détermination (131), pour au moins un message dudit groupe de messages, d'un score de similarité sémantique entre ladite au moins une partie du message en cours de composition et ledit au moins un message dudit groupe de messages,
- sélection (132) dans ledit groupe de messages, d'au moins un message en fonction dudit score de similarité sémantique déterminé pour ledit au moins un message dudit groupe,
- restitution (14) d'au moins une partie d'au moins un message de réponse reçu en réponse audit au moins un message sélectionné.

2. Procédé de traitement d'un message selon la revendication 1, dans lequel ledit groupe de messages est un historique de messages émis ou reçus par ledit utilisateur du terminal.

3. Procédé de traitement d'un message selon l'une quelconque des revendications 1 ou 2, dans lequel le message en cours de composition est un message texte ou vocal.

4. Procédé de traitement d'un message selon l'une quelconque des revendications 1 à 3, dans lequel le groupe de messages comprend des messages émis ou reçus à l'aide de différentes applications.

5. Procédé de traitement d'un message selon l'une quelconque des revendications 1 à 4, dans lequel au moins un message dudit groupe est sélectionné lorsque le score de similarité sémantique dudit message est supérieur à un seuil prédéterminé.

6. Procédé de traitement d'un message selon la revendication 5, dans lequel lorsque plusieurs messages dudit groupe présentent un score de similarité sémantique supérieur audit seuil prédéterminé, le message dudit groupe présentant le score de similarité sémantique le plus élevé est sélectionné.

7. Procédé de traitement d'un message selon l'une quelconque des revendications 1 à 6, dans lequel la restitution de ladite au moins une partie dudit moins un message de réponse comprend l'affichage de ladite au moins une partie du message de réponse dans une interface graphique d'une application de communication via laquelle l'utilisateur compose son message, ladite au moins une partie du message de réponse étant affichée dans une bannière placée au-dessus d'une fenêtre dans laquelle l'utilisateur compose son message.

8. Procédé de traitement d'un message selon l'une quelconque des revendications 1 à 7, dans lequel lorsque tous les scores de similarité sémantique des messages dudit groupe sont inférieurs à un seuil prédéterminé, aucun message dudit groupe n'est sélectionné.

9. Dispositif de traitement d'un message en cours de composition, ledit dispositif de communication comprenant une mémoire (MEM) et un processeur (PROC) configuré pour:
- accéder à un groupe de messages comprenant au moins un message émis par ledit utilisateur vers au moins un utilisateur destinataire,
- obtenir au moins une partie dudit message en cours de composition par ledit utilisateur,
- déterminer, pour au moins un message dudit groupe de messages, un score de similarité sémantique entre ladite au moins une partie du message en cours de composition et ledit au moins un message dudit groupe de messages,
- sélectionner dans ledit groupe de messages, au moins un message en fonction dudit score de similarité sémantique déterminé pour ledit au moins un message dudit groupe,
- restituer au moins une partie d'au moins un message de réponse reçu en réponse audit au moins un message sélectionné.

10. Terminal comprend un dispositif de traitement d'un message selon la revendication 9.

11. Programme comportant des instructions pour la mise en œuvre du procédé de traitement de message selon l'une quelconque des revendications 1 à 8, lorsque ledit programme est exécuté par un processeur.
